# EUROPEAN PATENT SPECIFICATION

(11) **EP 1 314 710 B1**
(45) Date of publication and mention of the grant of the patent: **11.01.2012**
(21) Application number: 02425717.2
(22) Date of filing: 22.11.2002
(51) Int. Cl.: C05F 17/00, C05F 9/04, C05F 1/00

(54) **A process of maturing and stabilizing biomasses under reduction of smelling emissions**
Ein Verfahren zum Reifen und Stabilisieren der Biomassen unter Reduzieren der riechenden Abgase
Une procédure de mûrir et de stabiliser des biomasses sous la réduction d'émissions sentantes

(30) Priority: 26.11.2001 IT RM20010696
(43) Date of publication of application: 28.05.2003
(73) Proprietor: Cooperativa Trasporti Imola SCRL (CTI Scrl), I-40026 Imola - bo (IT); AMEK Piccola Soc. Coop. a r.l., 44100 Ferrara (IT)
(72) Inventor: Ridolfi, Adriano, 40026 Imola (BO) (IT); Memmi, Maura, 40027 Mordano (BO) (IT)
(74) Representative: Sarpi, Maurizio

(56) References cited:
- DE-A- 19 903 423
- US-A- 2 317 991

## Description

The present invention relates to the treatment of fermentescible matrices, organic rubbish, animal dejections, and generally biomasses, and more particularly relates to a process of maturing and stabilizing biomasses that make use of natural enzymatic mixtures capable of speeding up biooxidation processes significantly so as to reduce the number by which the treated heaps are turned and the smelling emissions of the same.
For such reason the mixtures of the present invention find a very wide field of application, for instance, in the dejection maturing heaps, compost forming maturing heaps, and rubbish collection skips to start the maturation in situ and to reduce the evil-smelling exhalations waiting for disposal.

It is known that a large amount of compost is produced today and used in agriculture and gardening by the bacterial degradation of the putrescible material as described in US-A-2317991 and DE-A-19903923.
As known the process of composting is divided essentially into two steps: stabilizing and maturing. Stabilizing, that is obtained by aerobic digestion, uses the large amount of microrganisms and the wide variety of nutrient substances which are necessary for the growth of such population included in common city rubbish.
In the space of time from some days to a month the complex organic compounds are degraded biologically to simple substances which can be directly assimilated by plants. The process is sometime conducted onto the rubbish accumulated and stirred now and then.
After the first step, the biomass is let mature slowly for some weeks until the final stable product is obtained.
In the industrial embodiment, the rubbish which have been previously ground to be homogenized are introduced into apparatus which are provided with mechanical handling systems and forced ventilation. The Patent literature is rich in a number of solutions relative to such installations. However, the several solutions proposed are not quite satisfying from the point of view of cost saving since the cost of installation are high both in terms of processing and energy consumption.
Moreover a lot of problems relative to the environmental conditions, especially as far as the amount of gas and smell emissions is concerned, still remain unsolved.
In order to speed up the oxidation processes, suitable enzymatic products have been resorted to. In fact a variety of simple or complex enzymatic systems are known in nature and capable of inducing the development of oxygen from simple substrates (oxygenic photosynthesis) or reaction intermediates (superoxide dismutase, catalase, etc.). Such enzymatic systems, however, cannot easily be usable on a large scale in the treatment of biomasses due both to cost and difficulty of controlling the process induced and the development of side products and smell emissions that can cause troubles and pollution.
A first object of the present invention is to provide an enzymatic preparation to be used in several processes of maturing and stabilizing biomasses to speed up the biooxidation, which preparation unlike what known so far, is obtained by the simple combination of natural raw materials easily available at low cost.
A second object of the invention is to provide a process of maturing and stabilizing fermentescible organic matrices that allow the number of necessary turnings to be reduced by the use of such preparation so that the composting process is kept under thermophile conditions without continuous changes in temperature.
In fact it is known that the known processes resort to a number of turnings that on one hand provide oxygen, on the other hand dispose heat. At every turning the process passes from thermophile conditions to mesophile conditions. The temperature decreases and breaks the duty cycle of the thermophile microrganisms in operation. Once such microrganisms resume their activity again, heat is produced and thermophile conditions are established again, such conditions being interrupted again upon a new turning. In praxis, such continuous changes in temperature reduce the speed of the process significantly.
Another object of the present invention is to provide a process of maturing and stabilizing biomasses that reduces the smell emissions.
Still another object of the invention is to provide a process of maturing and stabilizing biomasses with a lower production of methane and CO₂ than the processes of the prior art.
According to the invention all of the objects mentioned above are achieved by a process providing the use of an enzymatic preparation in which some vegetal components rich in vitamins, such as vitamin A, vitamin C (ascorbic acid) and E, are present along with further components capable of developing flavours and scents able to cover evil smells, such as labiates and some umbellifers as well as another ingredient still of natural origin: milk.
The scope of the invention is defined in the appended claims.
It is known that a natural product such as milk is an accumulation of ferments allowing the development of degradation with poor gas production.
In fact milk includes bifidobacteria that produce lactic and acetic acids with a ratio of 2/3 without producing gas. Enzymes are certainly present such as lactoperoxidase and others which are able to increase the production of humus and detoxification.
The mode of preparing the enzymatic compositions according to the present invention is very simple:
- selecting vegetal components belonging to families of cucurbits, grass, labiate, umbellifers and rue or vegetal parts able on one hand to develop smells (flavours and scents) and on the other hand to give vitamins such as vitamins A, E and C (ascorbic acid) to the phase of full vegetative development, i.e. upon harvesting according to the use, the withered or rotten portions being eliminated;
- comminuting such raw materials under the size of a grain of rice;
- mixing the comminuted parts obtained to one another;
- adding a dose of non-pasteurized milk to the mixture obtained at a temperature lower than 60°C (in order to avoid pasteurisation) in about the same proportions, i.e. 1:1, based on the total weight of the vegetal mixture.
The preparation obtained in this way with a doughy consistency is poured onto the heap to be treated as homogeneously as possible in a proportion of 0.1-2 kg per cubic meter of heap.
The experimentation carried out has highlighted the formation of a surface layer that filters the output of the gases produced in the inside, thus reducing the smelling emissions. Still by experimentation, there were noticed that oxygen pressure lower than the atmospheric pressure inside the underlying heap causing the growth and the development of microaerophile microorganisms that carry out the maturing and stabilizing processes which take place under aerobic conditions (oxidative biodegradation of organic, also fermentescible matrices), thus reducing the number of turnings necessary to supply oxygen.
Accordingly:
- the smell emissions are reduced because their development reaches a maximum just during turning;
- the process is speeded up due to operations under constant thermophile conditions, without thermal changes that are typical during turning, so that the process operation conditions are controlled;
- the temperatures reached are the highest temperature during turnings, then not as high as to sterilize also microorganisms that should operate in composting but enough to sterilize the pathogens according to the condition of keeping a temperature greater than 55°C during at least three consecutive days;
- degradation causes a lower production of methane and CO₂ with respect to the known composting processes of today.
The results of the experiments carried out over six months have further allowed the thermal effect due to the described method to be detected.
The treated heap reaches temperatures which are in the average greater than those of the not treated heap; moreover the higher quality of the final product is pointed out above all in terms of proportion of humic and fulvic acids or relative humidity.
According to a further feature of the invention, the kinetics of the method disclosed above is speeded up by using in combination with milk also acetic substances, in an amount of 1/4 to 1/2 as high as the quantity by weight of added milk.
The results of the experiments carried out are shown below.

### STEPS OF THE EXPERIMENTS

The experiments have been performed within a composting installation over a period of six month. The first step consists of the formation of two heaps by the weight of 45 tons each which are obtained by dividing into two portions the same amount of material as the daily yield of the installation. The starting material was a homogenous mixture of an organic waste fraction from differentiated collection and wooden cellulose material in the proportion of about 60% and 40%, respectively.
The enzyme preparation previously obtained by the extent of about 1 kg per cubic metre of heap is put into the heap during its formation so that it is called "treated" heap.
In parallel therewith a reference heap, so-called "white", is formed.
The second step includes the analysis of the evolution of the heaps followed by the analysis of parameters of both heaps which are believed significant at regular intervals as listed below.
The third step includes the analysis of data and its discussion.
The experiments are considered finished after six months from their beginning.

### CHARACTERISTICS OF THE EVOLUTION MASS

The biochemical complexity of the composting method on one side and the non-homogeneity of the material which is being composted on the other side causes serious problems upon defining the significant parameters to be measured in order to evaluate the progress of the mass maturing step and its chemical-physical characteristics.

Referring to the literature and the previous experience regarding systems of reduced mass, the specified chemical, chemical-physical parameters are as follows:
Temperature: the variation in the temperature as a function of the time defines the period of aerobic enzymatic degradation and controls the oxidation level of the organic substance.
pH: it provides information about the stability of the product and the maturing state of the compost as well as the quality thereof.
Conductivity: it allows the coefficient of mineralization of the composted material to be determined.
Gaseous emissions: they allow the environmental pollution of the method and the level of the anaerobic processes to be estimated and further give important information about the state of progress of the fermentative processes and the nature of the chemical reactions involved.
Heavy alkaline and alkaline-earth metals: the determination of the heavy metals is fundamental as their amount is restricted by the law in force. Alkaline and alkaline-earth ions play a basic role in the vegetal metabolism. In addition, their concentration allows the coefficient of mineralization of the compost to be estimated.
Organic carbon, total N, C/N, C/P: these are quantities indicating the quality of the compost.
Humic and fulvic acids: the amount of humic and fulvic acids indicates the quality of the compost and its maturing degree.
Aspects and determinations of microbiological nature have not been the object of such experiments.

### ANALYSIS AND DISCUSSION OF DATA

### Sampling

The sampling was carried out following a casual method by drawing an amount of compost of about 200 g in 8 different sites at a depth of 20 cm.
The samples were then mixed to one another and drawings to be analysed after milling and sieving were made from the whole sample.

### Turnings

| | |
|---|---|
| Beginning of the experiments | October 25, 1999 |
| First turning | November 25, 1999 |
| Second turning | December 17, 1999 |
| Third turning | January 27, 2000 |
| Sieving | February 14, 2000 |
| End of the experiments | April 25, 2000 |

### Temperature

The temperature was measured at a depth of 40 cm at the same sites in which the drawings were made.
Data relative to the treated heap and the white are shown in the following Table I:

**TABLE I**

| Time (days) | Average T (°C) | |
|---|---|---|
| | UNTREATED HEAP | TREATED HEAP |
| 3 | 63 | 65 |
| 8 | 58 | 66 |
| 15 | 46 | 58 |
| 18 | 36 | 63 |
| 24 | 37 | 59 |
| 30 | 28 | 48 |
| 39 | 49 | 48 |
| 46 | 42 | 38 |
| 50 | 35 | 38 |
| 53 | 31 | 35 |
| 57 | 49 | 42 |
| 63 | 39 | 33 |
| 75 | 31 | 35 |
| 82 | 23 | 30 |
| 90 | 21 | 19 |
| 97 | 10 | 5 |
| 98 | 40 | 10 |
| 105 | 37 | 14 |
| 115 | 33 | 11 |

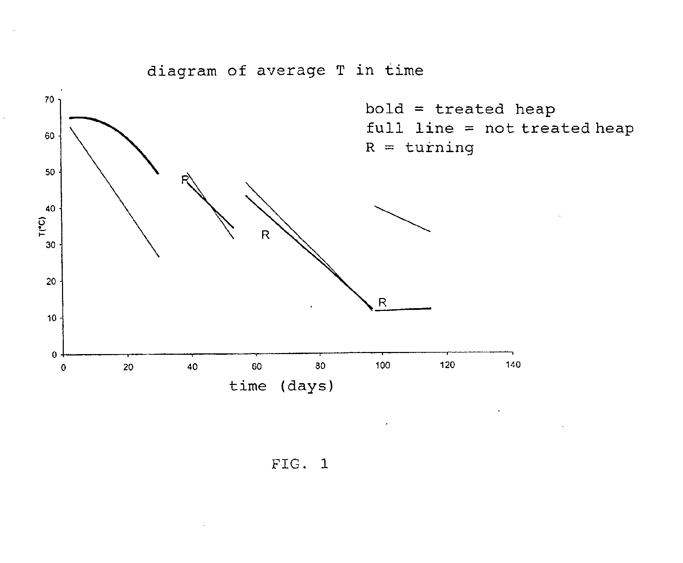

The diagram of the average temperature as a function of the time is shown in Fig. 1.
It should be noted from the diagram that the temperature of the treated heap is the same as the white at the beginning of the process but after just a few days the temperature of the treated heap is considerably higher than the white (27°C after 18 days from the beginning of the maturing process). This indicates clearly that a greater oxidation activity is observed in the treated heap because the increase in the temperature is related to the biooxidation reactions. In addition, the decrease in the temperature of the non-treated heap which is related to the decrease in O₂ available in the fermentation mass seems to be faster, thus showing that the biooxidation activity decrease under the same conditions more quickly than it occurs in the treated heap.
After the first turning, 30 days since the beginning of the process, a further differentiation of the two behaviour is given. Actually, the temperature of the treated heap does not significantly change, thus inducing to believe that the oxidation activity is somehow less depending on the presence of the atmospheric oxygen. Furthermore, if the temperature ranging of the treated heap is monitored immediately after turning, there is observed that there is no sudden variation with respect to the previous temperature.
In contrast, the temperature of the non-treated heap is subjected to a sudden increase from 28 to 49 degrees following the turning. Such typical behaviour shows that the biooxidation reactions, that are slowed down by the anaerobiosis conditions which are being created in the static heap, start again after the oxygenation because of turning. (It should be appreciated that the slope of the line relative to the non-treated heap is the same as the line relative to the initial period before turning, which suggests that the process is repeated under the same conditions. Therefore, the process is interrupted and started again while the basic continuity in temperature of the treated heap would indicate a process developing without breaks, i.e. without being limited by the lack of a reactant).
After the second turning, 57 days since the beginning of the process, the temperature of both heaps increases as follows: the temperature of the treated heap increases by only 7°C and that of the non-treated heap by 18°C. The temperature of the treated heap remains lower than that of the non-treated heap.
After the third turning, 98 days since the beginning of the process, the temperature of the non-treated heap is subjected to a new sudden increase (from 10°C to 40°C) while the temperature of the treated heap does not undergo any important variation and settles down at the room temperature T. The difference in the temperatures of the two heaps clearly indicates that the biooxidation process at this point can already be considered finished for the treated heap while it is still operating for the non-treated heap.

**TABLE II**

| Average temperature at 1 meter | | |
|---|---|---|
| | T (°C) | T (°C) |
| Days | UNTREATED HEAP | TREATED HEAP |
| 3 | 52.0 | 53.4 |
| 8 | 71.3 | 69.3 |
| 16 | 64.8 | 68.9 |
| 26 | 42.8 | 57.2 |
| 33 | 73.8 | 73.8 |
| 51 | 47.1 | 41.4 |
| 68 | 62.3 | 50.5 |

The same remarks as above are also valid for such temperatures, considering that the temperatures are levelled out because of the insulating effect of the mass.

### pH

The values of pH relative to the two heaps are shown in table III.

**TABLE III**

| | pH | |
|---|---|---|
| Time (days) | UNTREATED HEAP | TREATED HEAP |
| 3 | 9.74 | 7.16 |
| 8 | 8.81 | 8.72 |
| 15 | 9.4 | 9.31 |
| 18 | 9.3 | 9.17 |
| 24 | 9.21 | 9.03 |
| 30 | 9.23 | 9.13 |
| 39 | 9.27 | 9.5 |
| 46 | 9.1 | 8.6 |
| 50 | 8.9 | 9.1 |
| 57 | 9.4 | 9.2 |
| 63 | 9.2 | 9.3 |
| 75 | 9.4 | 9 |
| 82 | 9 | 8.9 |
| 90 | 9 | 8.98 |
| 98 | 9.02 | 8.89 |
| 105 | 9 | 8.86 |
| 115 | 9.2 | 8.54 |

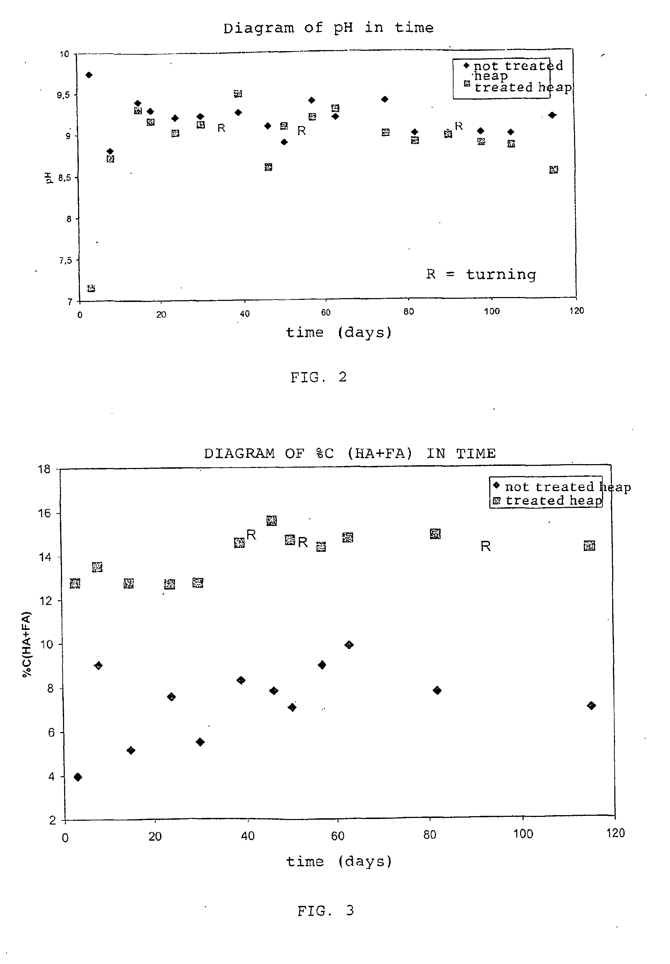

The diagram of pH as a function of the time is shown in Fig. 2.
Data of pH shows that pH of the two heaps, apart from the initial values which are significantly different (9.7 for the non-treated heap and 7.2 for the treated heap), there is no essential difference between the two heaps because pH ranges between 9.5 and 9 during a time of two and half months. Since that time on it is observed a substantial invariability of pH of the non-treated heap about a value of 9, while pH of the treated heap decreases until a value of 8.5 is reached.
As the value of pH is bound to the presence of ammonia, its decrease with time because of the exhaustion of the degradation processes of the nitrogenous substances (proteins) is observed.

### Conductivity

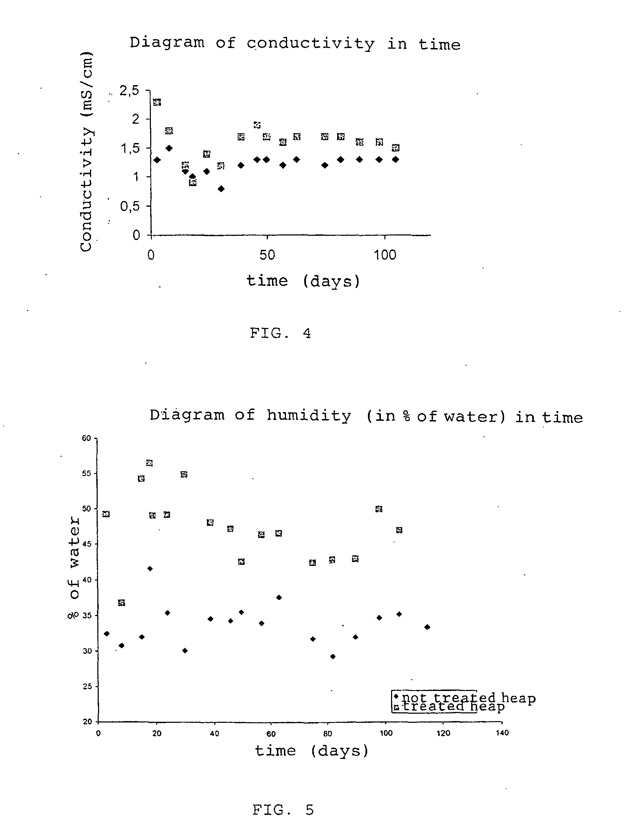

The value of conductivity of both heaps is shown in table IV, while Fig. 4 shows the diagram of such parameter as a function of the time.

**TABLE IV**

| Time (days) | CONDUCTIVITY (mS/cm) | |
|---|---|---|
| | UNTREATED HEAP | TREATED HEAP |
| 3 | 1.3 | 2.3 |
| 8 | 1.5 | 1.8 |
| 15 | 1.1 | 1.2 |
| 18 | 1.0 | 0,9 |
| 24 | 1.1 | 1.4 |
| 30 | 0,8 | 1.2 |
| 39 | 1.3 | 1.7 |
| 46 | 1.3 | 1.9 |
| 50 | 1.2 | 1.7 |
| 57 | 1.3 | 1.6 |
| 63 | 1.3 | 1.7 |
| 75 | 1.2 | 1.7 |
| 82 | 1.3 | 1.7 |
| 90 | 1.3 | 1.6 |
| 98 | 1.3 | 1.6 |
| 105 | 1.3 | |

Analysis of data shows that the value of conductivity of the treated heap is always greater than the non-treated heap. Thus it seems that the treated heap has a deeper mineralization than the non-treated heap, which involves a direct or indirect action of the enzyme preparation provided for the treatment according to the present invention.

### Humidity

The value of humidity of both heaps is shown in table V. Fig. 5 shows the diagram of humidity as a function of the time.

**TABLE V**

| Time | HUMIDITY (% water) | |
|---|---|---|
| | UNTREATED HEAP | TREATED HEAP |
| 3 | 32.5 | 49.3 |
| 8 | 30.8 | 36.8 |
| 15 | 32 | 54.3 |
| 18 | 41.6 | 56.5 |
| 24 | 35.4 | 49.2 |
| 30 | 30.1 | 54.9 |
| 39 | 34.6 | 48.1 |
| 46 | 34.3 | 47.2 |
| 50 | 35.5 | 42.6 |
| 57 | 34 | 46.4 |
| 63 | 37.6 | 46.6 |
| 75 | 31.8 | 42.5 |
| 82 | 29.3 | 42.9 |
| 90 | 32 | 43 |
| 98 | 34.7 | 50 |
| 105 | 35.2 | 47 |
| 115 | 33.4 | 49.1 |

The values of the humidity of the treated heap expressed as water proportion are constantly greater by 10% than those of the non-treated heap. Data relative to the humidity is particularly important as far as both the maturing process of the organic matter and the quality of the product obtained is concerned. In the first case it should be appreciated that the optimum value for an efficient biooxidation is between 50% and 60% which is constantly held in the treated heap, while the humidity of the non-treated heap is about 35%.

### Organic carbon

The values relative to TOC (organic carbon) and HA+FA (humic acid + fulvic acid) as well as their development in time are shown in tables VI and VII.

**TABLE VI**

| Time (days) | TOC | |
|---|---|---|
| | UNTREATED HEAP | TREATED HEAP |
| 3 | 24.4 | 35.19 |
| 8 | 25.58 | 30.29 |
| 15 | 18.08 | 32.77 |
| 24 | 26.35 | 32.42 |
| 30 | 24.36 | 33.93 |
| 39 | 22.07 | 33.74 |
| 46 | 20.76 | 31.12 |
| 50 | 20.82 | 31.11 |
| 63 | 15.33 | 32.65 |
| 82 | 24.81 | 33.49 |
| 115 | 21.23 | 32.21 |

**TABLE VII**

| Time (days) | TOC | |
|---|---|---|
| | UNTREATED HEAP | TREATED HEAP |
| 3 | 3.97 | 12.79 |
| 8 | 9.02 | 13.53 |
| 15 | 5.17 | 12.77 |
| 24 | 7.55 | 12.7 |
| 30 | 5.5 | 12.76 |
| 39 | 8.28 | 14.57 |
| 46 | 7.81 | 15.57 |
| 50 | 7.08 | 14.71 |
| 57 | 8.98 | 14.37 |
| 63 | 9.87 | 14.78 |
| 82 | 7.76 | 14.9 |
| 115 | 7 | 14.3 |

Data relative to organic carbon and the proportion of humic and fulvic acids are particularly important for the contribution of organic substances to the soil because of the use of compost.
The two heaps differentiate significantly from each other as far as such parameters is concerned. In fact the treated heap has a content of total organic carbon, educible organic carbon and humic and fulvic acids which is far greater than the non-treated heap.
In particular, there is a much greater proportion of humic and fulvic acids that reach a value greater than 14 at the end of the process, i.e. a value which is double as high as the non-treated heap and much greater than the minimum limits of the law in force in Italy.
Further experiments carried out on heaps with different composition have confirmed in any case that the proportion of humic and fulvic acids attained at the end of the process is between 10 and 12.
The obtained data, even if limited and preliminary suggests that the process of humification is modified by the presence of the enzyme mixture according to the invention. In fact a faster kinetics of formation of fulvic acids is observed in the treated compost, such fulvic acids reaching higher concentration and slowly changing to humic acids. The amount of fulvic acids in the non-treated sample does not ever reach high values with respect to humic acids.

### Heavy metals

As far as heavy metals is concerned, there are no significant differences between the two heaps; the values shown in table VIII are essentially the same for Zn, Cr, Mn, Pb, Cd, Co, Cu and Ni.

**TABLE VIII**

| | TREATED HEAP | UNTREATED HEAP |
|---|---|---|
| | mg/kg | mg/kg |
| Zn | 201 | 220 |
| Cr | 34.4 | 34.1 |
| Mn | 384 | 544 |
| Pb | 80.73 | 73.35 |
| Cd | 0.5 | 1.0 |
| Co | 4.154 | 5.12 |
| Cu | 107 | 100 |
| Ni | 24.81 | 30.29 |

### C/N

The values of Ctot, Ntot and the ratio C/N are shown in table IX.

**TABLE IX**

| | UNTREATED HEAP | | | TREATED HEAP | | |
|---|---|---|---|---|---|---|
| days | C | N | C/N | C | N | C/N |
| 3 | 24.4 | 1.66 | 14.7 | 35.19 | 2.4 | 14.4 |
| 8 | 25.6 | 1.61 | 15.9 | 30.29 | 2.3 | 13.4 |
| 15 | | | 14.4 | | | 12.9 |
| 24 | 26.35 | 1.65 | 16 | 32.4 | 2.4 | 13.6 |
| 30 | 24.4 | 1.9 | 13.1 | 33.9 | 2.7 | 12.8 |
| 39 | 22.1 | 1.2 | 19 | 33.7 | 2.5 | 3.6 |
| 46 | 20.8 | 1.35 | 15.4 | 31.1 | 2.8 | 11 |
| 50 | 20.8 | 1.6 | 13.1 | 31.1 | 2.9 | 10.7 |
| 57 | 10.7 | 0.7 | 14.8 | 19.7 | 1.3 | 14.9 |
| 63 | 15.3 | 1.1 | 13.8 | 32.6 | 2.6 | 12.5 |
| 79 | 24.8 | 2 | 12.5 | 33.5 | 2 | 12.1 |
| 112 | 21.2 | 1.8 | 11.5 | 32.2 | 2.5 | 12.8 |
| 112 | 16.7 | 1.3 | 12.5 | 27.2 | 2.5 | 10.9 |
| 140 | 29.5 | 2.7 | 11.1 | 30.8 | 2.7 | 11.3 |
| 155 | 20.8 | 2 | 10.4 | 27.1 | 2.8 | 9.6 |
| 172 | 19.3 | 1.6 | 11.7 | 27 | 2.7 | 9.9 |

It should be appreciated that if there is not very marked difference in the absolute value of the carbon-nitrogen ratio, there is a significant difference in the relative amounts of carbon and nitrogen that are always greater in the treated heap than in the non-treated heap. The reasons of such behaviour could be a difference in the transformation process of the organic substance because of the treatment.
These differences are important for the quality of the product obtained and its agronomic use: in fact a higher amount of carbon makes the product better with regard to the contribution of the organic substance to the soil, while a higher amount of nitrogen makes it more efficient as fertilizer.
It should be noted that it is important to analyse the form of nitrogen which is present in the material, i.e. nitric or ammoniac nitrogen.

### Total Phosphorus

The total amount of phosphorus is greater in the treated heap than in the non-treated heap (3745 mg/kg ss, 2554 mg/kg ss). C/P ratio is about the same in both heaps: 0.082 in the treated heap and 0.084 in the non-treated heap. To this regard, the same consideration for C/N ratio are valid.

### Yield

The yield of both heaps is about the same as it results from table X:

**TABLE X**

| YIELD | UNTREATED HEAP | TREATED HEAP |
|---|---|---|
| STARTING | 45,000 kg | 45,000 kg |
| COMPOST | 15,600 kg | 11,400 kg |
| SCREENING REMAINDER | 11,280 kg | 8,850 kg |
| COMPOST/SCREENING REMAINDER | 58% | 56% |

Even if the yield is essentially the same, it should be appreciated that there is a difference in the amount of material obtained and the type of screening remainder.
The amount of compost obtained by the treated heap is lower than the non-treated heap. This indicates that the aerobic fermentation processes leading to the formation of higher amounts of CO₂ and H₂O are much more important.
The screening remainder of the treated heap further consists of wooden "clean" material, and there is a substantial lack of organic material to be further treated which does not need to be put into the head of the installation again for a further treatment.

### Conclusions

From the analysis of data and considerations expressed so far it is possible to conclude that the enzyme preparation of the present invention has an effective action in the treatment of organic fermentescible matrices.
This action can reasonably consist of:
- a speed-up of the biooxidation processes,
- a deeper mineralization,
- a greater efficiency of the humification reactions,
- an improvement of the quality of the final fertilizer.
The treatment with the enzyme preparation further gives a greater humidity to the material during maturation.
Form the point of view of the running of the process of composting, the treatment with such preparation allows a lower number of turnings with the consequence of a cost saving and an improvement of the safety conditions because of the lower use of turning machines.

## Claims

1. Enzymatic composition to be used in biomass maturing and stabilizing processes to speed up the biooxidation, **characterized in that** it includes vegetal components rich in vitamins A,E,and C, choosen in the group including families of cucurbits, grass, labiate, umbellifers and rue, vegetal components able to develop flavours and scents, and milk.

2. Enzymatic composition to be used in biomass maturing and stabilizing processes to speed up the biooxidation according to claim 1, **characterized in that** the vegetal components rich in vitamins and the vegetal components able to develop flavours and scents are selected upon their phase of full vegetative development or their phase of seed and fruit maturation.

3. Enzymatic composition to be used in biomass maturing and stabilizing processes to speed up the biooxidation according to claim 1, **characterized in that** non pasteurised milk is in a proportion of 1:1 on the total weight of the vegetal components.

4. Enzymatic composition to be used in biomass maturing and stabilizing processes to speed up the biooxidation according to claim 1, **characterized in that** in addition acetic substances are added in an amount of 1/4 to 1/2 of the amount of milk.

5. Process for the preparation of the enzymatic composition of claims 1 to 4 **characterized in that** it comprises the following steps:
a) selecting the vegetal components rich in vitamins and the vegetal components able to develop flavours and scents upon their phase of full vegetative development or their phase of seed and fruit maturation;
b) throwing away their withered or rotten portions;
c) comminuting the materials obtained in step b) under the size of a grain of rice;
d) adding non-pasteurized milk in a proportions of 1:1 of the total weight of the vegetal components at a temperature lower than 60°C.

6. Process for the preparation of the enzymatic composition of claims 1 to 4 according to claim 5 **characterized in that** it comprises an additional step e) of adding acetic substances in an amount of 1/4 to 1/2 of the total amount of milk.

7. Process of maturing and stabilizing biomasses **characterized in that** the enzymatic composition of claims 1 to 4 is poured onto the heap to be treated during its formation as homogeneously as possible in order to:
speed up the biooxidation processes and reduce the number of turnings of the heap as well as the contribution of oxygen from the outside, and further
form a surface layer which filters the outlet of gases produced inside in order to reduce the smelling emissions.

8. The process of maturing and stabilizing biomasses according to claim 7 **characterized in that** the enzymatic composition is poured onto the heap to be treated in a proportion of 0.1-2 kg per cubic meter of heap.

9. The process of maturing and stabilizing biomasses according to claim 7 **characterized in that** under the surface layer of the the heap to be treated, the pressure of oxygen is lower than the atmospheric pressure in order to permit growth and development of microaerophile microorganisms that carry out the maturing and stabilizing aerobic processes in order to reduce the number of the turnings.

10. The process of maturing and stabilizing biomasses according to claim 7 **characterized in that** it is carried out constantly under thermophile conditions.

11. The process of maturing and stabilizing biomasses according to claim 7 **characterized in that** the temperature inside the heap to be treated is high enough to sterilize pathogens.

12. The process of maturing and stabilizing biomasses according to claim 7 **characterized in that** the temperature inside the heap to be treated is greater than 55°C during at least three consecutive days.

13. The process of maturing and stabilizing biomasses according to claim 7 **characterized in that** the degradation develops without detectable production of methane and with a rate of CO₂ little higher than the rate of the atmosphere.

14. The process of maturing and stabilizing biomasses according to claim 7 **characterized in that** inside the heap to be treated the humidity is constant between 40 and 55%.

15. The process of maturing and stabilizing biomasses according to claim 10 **characterized in that** the proportion of humic and fulvic acids in the treated heap at the end of the process is between 10 and 14.

## Patentansprüche

1. Enzymatische Zusammensetzung zur Verwendung in Biomasse-Reifungs- und Stabilisierungsverfahren zur Beschleunigung der Biooxidation, **dadurch gekennzeichnet, dass** sie pflanzliche Bestandteile einschließt, die reich an Vitaminen A, E und C sind, ausgewählt aus der Gruppe, die die Familien der Kürbisgewächse, Gräser, Labiaten, Umbelliferen und Rauten einschließt, sowie pflanzliche Bestandteile, die dazu in der Lage sind, Geschmacksstoffe und Duftstoffe zu entwickeln, und Milch.

2. Enzymatische Zusammensetzung zur Verwendung in Biomasse-Reifungs- und Stabilisierungsverfahren zur Beschleunigung der Biooxidation gemäß Anspruch 1, **dadurch gekennzeichnet, dass** die pflanzlichen Bestandteile die reich an Vitaminen sind, und die pflanzlichen Bestandteile, die dazu in der Lage sind, Geschmacksstoffe und Duftstoffe zu entwickeln auf Grundlage ihrer Phase der vollen vegetativen Entwicklung oder ihrer Phase der Samen- und Fruchtreifung ausgewählt werden.

3. Enzymatische Zusammensetzung zur Verwendung in Biomasse-Reifungs- und Stabilisierungsverfahren, zur Beschleunigung der Biooxidation gemäß Anspruch 1, **dadurch gekennzeichnet, dass** nicht-pasteurisierte Milch in einem Verhältnis von 1:1 bezüglich des Gesamtgewichtes der pflanzlichen Bestandteile vorliegt.

4. Enzymatische Zusammensetzung zur Verwendung in Biomasse-Reifungs- und Stabilisierungsverfahren zur Beschleunigung der Biooxidation gemäß Anspruch 1, **dadurch gekennzeichnet, dass** zusätzlich saure Substanzen in einer Menge von 1/4 bis 1/2 bezüglich der Menge der Milch zugesetzt werden.

5. Verfahren zur Herstellung der enzymatischen Zusammensetzung nach Anspruch 1 bis 4, **dadurch gekennzeichnet, dass** sie die folgenden Schritte umfasst:
a) Auswählen der pflanzlichen Bestandteile, die reich an Vitaminen sind und der pflanzlichen Bestandteile, die dazu in der Lage sind Geschmacksstoffe und Duftstoffe zu entwickeln aufgrund ihrer Phase der vollen vegetativen Entwicklung oder ihrer Phase der Samen- und Fruchtreifung,
b) Verwerfen der verwelkten oder verrotteten Anteile;
c) Zerkleinern der Materialien, die in Schritt b) gewonnen wurden bis unterhalb der Größe eines Reiskorns;
d) Zusetzen von nicht-pasteurisierter Milch in Verhältnissen von 1:1 bezüglich des Gesamtgewichtes der pflanzlichen Bestandteile bei einer Temperatur von weniger als 60°C.

6. Verfahren zur Herstellung der enzymatischen Zusammensetzung nach Ansprüchen 1 bis 4 gemäß Anspruch 5, **dadurch gekennzeichnet, dass** es einen zusätzlichen Schritt e) des Zusetzens von sauren Substanzen in einer Menge von 1/4 bis 1/2 der Gesamtmenge der Milch umfasst.

7. Verfahren zum Reifen und Stabilisieren von Biomassen, **dadurch gekennzeichnet, dass** die enzymatische Zusammensetzung der Ansprüche 1 bis 4 auf den zu behandelnden Haufen während seiner Ausbildung so homogen wie möglich aufgegossen wird, um:
die Biooxidationsverfahren zu beschleunigen und die Anzahl der Wendungen des Haufens ebenso wie den Beitrag von Sauerstoff von Außerhalb zu beschleunigen, und
weiterhin
eine Oberflächenschicht zu bilden, die den Gasausstoß filtert, der auf der Innenseite erzeugt wird, um die Geruchsemissionen zu reduzieren.

8. Verfahren zur Reifung und Stabilisierung von Biomassen nach Anspruch 7, **dadurch gekennzeichnet, dass** die enzymatische Zusammensetzung auf den zu behandelnden Haufen in einem Anteil von 0,1 bis 2 Kilogramm pro Kubikmeter des Haufens aufgegossen wird.

9. Verfahren zur Reifung und Stabilisierung von Biomassen gemäß Anspruch 7, **dadurch gekennzeichnet, dass** unter der Oberflächenschicht des zu behandelnden Haufens der Sauerstoffdruck niedriger als der Atmosphärendruck ist, um das Wachstum und die Entwicklung von mikroaerophilen Mikroorganismen zu erlauben, die die aeroben Reifungs- und Stabilisierungsprozesse durchführen, um die Anzahl der Wendungen zu reduzieren.

10. Verfahren zur Reifung und Stabilisierung von Biomassen gemäß Anspruch 7, **dadurch gekennzeichnet, dass** es konstant unter thermophilen Bedingungen durchgeführt wird.

11. Verfahren zur Reifung und Stabilisierung von Biomassen gemäß Anspruch 7, **dadurch gekennzeichnet, dass** die Temperatur innerhalb des Haufens der behandelt werden soll, groß genug ist, um Pathogene zu sterilisieren.

12. Verfahren zur Reifung und Stabilisierung von Biomassen gemäß Anspruch 7, **dadurch gekennzeichnet, dass** die Temperatur innerhalb des zu behandelnden Haufens mehr als 55°C während zumindest drei aufeinanderfolgenden Tagen beträgt.

13. Verfahren zur Reifung und Stabilisierung von Biomassen gemäß Anspruch 7, **dadurch gekennzeichnet, dass** sich der Abbau ohne nachweisbare Produktion von Methan und mit einem CO₂-Anteil geringfügig höher als dem Anteil der Atmosphäre entwickelt.

14. Verfahren zur Reifung und Stabilisierung von Biomassen gemäß Anspruch 7, **dadurch gekennzeichnet, dass** die Feuchtigkeit innerhalb des zu behandelnden Haufens zwischen 40 und 55 % konstant ist.

15. Verfahren zur Reifung und Stabilisierung von Biomassen gemäß Anspruch 10, **dadurch gekennzeichnet, dass** der Anteil an Humin- und Fulvinsäuren im behandelten Haufen zum Ende des Prozesses zwischen 10 und 14 liegt.

## Revendications

1. Composition enzymatique à utiliser dans des procédés de maturation et de stabilisation des biomasses afin d'accélérer la biooxydation, **caractérisée en ce qu'**elle comprend des composants végétaux riches en vitamines A, E et C choisis dans le groupe comprenant les familles des cucurbitacées, des graminées, des labiacées, des ombellifères et la rue, des composants végétaux capables de développer des saveurs et des parfums, et du lait.

2. Composition enzymatique à utiliser dans des procédés de maturation et de stabilisation des biomasses afin d'accélérer la biooxydation selon la revendication 1, **caractérisée en ce que** les composants végétaux riches en vitamines et les composants végétaux capables de développer des saveurs et des parfums sont choisis lors de leur phase de développement végétatif total ou lors de leur phase de maturation des graines et des fruits.

3. Composition enzymatique à utiliser dans des procédés de maturation et de stabilisation des biomasses afin d'accélérer la biooxydation selon la revendication 1, **caractérisée en ce que** du lait non pasteurisé est en une proportion de 1 : 1 par rapport au poids total des composants végétaux.

4. Composition enzymatique à utiliser dans des procédés de maturation et de stabilisation des biomasses afin d'accélérer la biooxydation selon la revendication 1, **caractérisée en ce que** des substances acétiques sont en outre ajoutées en une quantité représentant 1/4 à 1/2 de la quantité de lait.

5. Procédé de préparation de la composition enzymatique décrite dans les revendications 1 à 4, **caractérisé en ce qu'**il comprend les étapes suivantes :
a) la sélection des composants végétaux riches en vitamines et des composants végétaux capables de développer des saveurs et des parfums lors de leur phase de développement végétatif total ou lors de leur phase de maturation des graines et les fruits ;
b) l'élimination de leurs parties flétries ou pourries ;
c) le broyage des matières obtenues dans l'étape b) jusqu'à une taille inférieure à la taille d'un grain de riz ;
d) l'ajout de lait non pasteurisé en une proportion de 1 : 1 par rapport au poids total des composants végétaux à une température inférieure à 60°C.

6. Procédé de préparation de la composition enzymatique décrite dans les revendications 1 à 4 selon la revendication 5, **caractérisé en ce qu'**il comprend une étape e) supplémentaire d'ajout de substances acétiques en une quantité représentant 1/4 à 1/2 de la quantité totale de lait.

7. Procédé de maturation et de stabilisation des biomasses, **caractérisé en ce que** la composition enzymatique décrite dans les revendications 1 à 4 est versée sur le monceau à traiter pendant sa formation d'une manière aussi homogène que possible pour :
- accélérer les processus de biooxydation et réduire le nombre de retournement du monceau ainsi que la contribution de l'oxygène provenant de l'extérieur, et en outre
- former une couche superficielle qui filtre le dégagement des gaz produits à l'intérieur afin de réduire les émissions de mauvaises odeurs.

8. Procédé de maturation et de stabilisation des biomasses selon la revendication 7, **caractérisé en ce que** la composition enzymatique est versée sur le monceau à traiter en une proportion de 0,1 kg à 2 kg par mètre cube de monceau.

9. Procédé de maturation et de stabilisation des biomasses selon la revendication 7, **caractérisé en ce que** sous la couche superficielle du monceau à traiter, la pression d'oxygène est inférieure à la pression atmosphérique afin de permettre la croissance et le développement des micro-organismes microaérophiles qui effectuent les processus aérobies de maturation et de stabilisation afin de réduire le nombre de retournements.

10. Procédé de maturation et de stabilisation des biomasses selon la revendication 7, **caractérisé en ce qu'**il est effectué sans interruption dans des conditions thermophiles.

11. Procédé de maturation et de stabilisation des biomasses selon la revendication 7, **caractérisé en ce que** la température à l'intérieur du monceau à traiter est suffisamment élevée pour stériliser les pathogènes.

12. Procédé de maturation et de stabilisation des biomasses selon la revendication 7, **caractérisé en ce que** la température à l'intérieur du monceau à traiter est supérieure à 55°C pendant au moins trois jours consécutifs.

13. Procédé de maturation et de stabilisation des biomasses selon la revendication 7, **caractérisé en ce que** la dégradation se développe sans production détectable de méthane et avec un taux de CO₂ légèrement plus élevé que le taux de l'atmosphère.

14. Procédé de maturation et de stabilisation des biomasses selon la revendication 7, **caractérisé en ce qu'**à l'intérieur du monceau à traiter, l'humidité est constante entre 40 % et 55 %.

15. Procédé de maturation et de stabilisation des biomasses selon la revendication 10, **caractérisé en ce que** la proportion d'acides humique et d'acides fulvique dans le monceau traité à la fin du procédé se situe entre 10 et 14.
